# DEMANDE DE BREVET EUROPEEN

(11) **EP 3 308 737 A1**
(43) Date de publication de la demande: **18.04.2018**
(21) Numéro de dépôt: 17203562.8
(22) Date de dépôt: 24.02.2014
(51) Int. Cl.: A61C 7/14, A61C 7/12, A61C 7/20, A61C 7/22

(54) **APPAREIL D'ORTHODONTIE VESTIBULAIRE**

(30) Priorité: 23.02.2013 FR 1351605
(62) Demande divisionnaire de: 14718634.0
(71) Demandeur: Benaddi, Amar, 59000 Lille (FR)
(72) Inventeur: BENADDI, Amar, 59000 Lille (FR); DUCHATEAU, Robert, 59870 Marchiennes (FR)
(74) Mandataire: Cabinet Plasseraud

(57) **Abrégé**

Appareil d'orthodontie vestibulaire, comprenant :
- une pluralité de supports (3), destinés à être assujettis sur la face vestibulaire des dents (2), comprenant chacun deux passages (5) internes de sections rondes, fermées,
- deux arcs (4) ronds, non pliés, destinés à traverser les deux passages (5), autorisant un glissement entre l'arc (4) et le passage (5),
et dans lequel les deux arcs (4) et les supports (3) sont destinés à coopérer pour assurer une correction des dents (2) suivant les trois dimensions de l'espace.

## Description

La présente invention concerne le domaine de l'orthodontie, et, plus particulièrement un appareil d'orthodontie multi-arcs, ainsi qu'un procédé de réalisation d'un tel appareil, individualisé.

Un tel appareil d'orthodontie trouvera une application particulière en orthodontie vestibulaire où les supports, couramment appelées « brackets », sont collés sur la face avant (vestibulaire) des dents.

L'homme du métier connaît les appareils d'orthodontie à simple arc. Cette technique à simple arc est depuis longtemps largement répandue chez les professionnels de la santé.

Généralement, ces appareils d'orthodontie comprennent des supports, encore appelés brackets, destinés à être fixés par collage sur la face avant ou vestibulaire (d'où le terme de technique vestibulaire), et parfois sur la face arrière ou linguale (d'où le terme technique linguale), de chaque dent pour servir d'attache à un arc. Cet arc est généralement réalisé en acier, ou plus récemment dans un alliage à mémoire de forme. Cet arc est destiné à être fixé sur chaque bracket, au niveau d'une gorge de section rectangulaire ménagée dans ce dernier. La section de cet arc peut être prévue ronde, carré ou rectangulaire. Au cours du traitement, l'orthodontiste est amené à changer le diamètre des arcs, le diamètre étant croissant et détermine la force appliquée aux dents. En début de traitement, l'orthodontiste utilise un ou plusieurs arcs de sections rondes, destinés à travailler en glissant dans les gorges des brackets. Ces arcs ronds ne permettent toutefois pas de corriger entièrement la position des dents. Par exemple l'interaction mécanique entre l'arc rond et le bracket, du fait de la possibilité de rotation entre la gorge et l'arc, ne permet pas d'imposer de couple autour de l'axe de l'arc et donc ne permet pas de corriger l'angle de la dent selon l'axe vestibulo-lingual. A la fin du traitement, l'orthodontiste finit toujours par poser un arc de section rectangulaire, logé au jeu d'emboitement dans la gorge rectangulaire pour finaliser la position des dents.

Le maintien de l'arc dans la gorge de chaque bracket afin d'éviter qu'il n'en sorte est réalisé par différents moyens de verrouillage connus de l'homme du métier, tels que des clips ou des ligaturages dans les documents EP 2 189 077 ou US 6 062 855.

Ces deux techniques présentent chacune leurs inconvénients. Ainsi la ligature peut parfois trop frotter sur l'arc et empêcher ce dernier de se déplacer dans la gorge, perturbant le traitement.

La ligature peut également se casser ce qui oblige l'orthodontiste à intervenir à nouveau pour remettre l'arc en position et continuer à appliquer les forces pour le mouvement recherché. Dans le cas des clips, ceux-ci peuvent être difficiles à ouvrir suite à l'accumulation de tartre.

De plus, suivant les matériaux utilisés pour les brackets, les professionnels de la santé rencontrent plus ou moins de problème. Ainsi, un bracket en métal implique de faibles frottements avec l'arc mais sont inesthétiques. Suite à ces problèmes, des brackets en polycarbonates ont été introduits mais ceux-ci ont tendance à se déformer sous la force exercée par les arcs sur les brackets et la correction de la position recherchée de la dent n'est plus assurée. Des brackets en céramique ont également été proposés mais ceux-ci peuvent casser lorsqu'une force excessive de l'arc est appliquée sur le bracket. Par ailleurs les frottements entre la céramique et l'arc sont considérés comme trop importants.

Pour remédier à ces inconvénients, il est connu un bracket en matériau céramique revêtu d'un matériau pour obtenir un coefficient de frottement relativement faible pour permettre le coulissement de l'arc facilement, comme dans le document EP 06 24 353.

Cependant l'utilisation d'un bracket par dent comprenant une seule gorge pour recevoir l'arc ne permet pas une correction optimale de la position de la dent, le contrôle de la position de la dent dans l'espace n'étant pas garanti avec un seul point de contact au niveau de la dent, sauf en fin de traitement lors de l'utilisation de l'arc de section rectangulaire.

Aussi en fin de traitement, selon les constatations de l'inventeur, un tel appareil implique souvent qu'une force trop importante est appliquée sur la ou les dents, en particulier à cause de l'arc de section rectangulaire qui augmente les frottements dans la gorge du support et donc la force appliquée sur les dents pour les amener en position corrigée. Bien souvent cette fin de traitement impose des forces trop importantes ce qui causent des douleurs au patient et parfois endommagent la racine de la dent ou rizalyse.

D'autres formes de brackets existent, tel que celui divulgué dans le document US 5 931 667. Ce bracket, appliqué suivant la technique vestibulaire présente une face dorsale dépourvue d'arêtes vives et comprend un passage tubulaire, de préférence de section rectangulaire au travers duquel passe un arc orthodontique. De tels brackets permettent de corriger, principalement, les problèmes d'alignement des dents et sont difficilement utilisables voir inutilisables lorsque les dents présentent de fortes malpositions, l'arc ne pouvant être inséré au travers du passage tubulaire (US 5931667 colonne 2 ligne 64 et colonne 3 lignes 5 à 8). S'agissant d'une technique de correction à simple arc, une correction optimale de la position des dents n'est garantie que si la section tubulaire est de section rectangulaire de manière à pouvoir transmettre un couple engendré par un arc de section rectangulaire correspondant.

Le positionnement des brackets sur les dents est une opération délicate à réaliser pour obtenir une bonne correction de la position de la dent. Ainsi, différentes améliorations ont été apportées pour s'adapter à l'angulation des faces postérieures des dents et placer la gorge du bracket dans une bonne position.

Selon une technique connue, divulguée dans le document US 2010/0280798, on analyse la dentition du patient en vue de déterminer un programme de traitement orthodontique en simulant une intervention à l'avance. Pour ce faire, on utilise par exemple des techniques d'imagerie tridimensionnelle ainsi que la technologie informatique afin de simuler et de prédire le mouvement dentaire en fonction du traitement choisi, c'est-à-dire d'un appareil orthodontique spécifique. Une fois les dents et les racines modélisées individuellement, on détermine l'angulation et l'angle d'inclinaison de chaque dent à partir des différents axes (axe mesiodistal, axe vestibulolingual ...). Ensuite un « set-up » est obtenu en créant une image virtuelle en trois dimensions de la position des dents souhaitée, et permet de sélectionner et positionner les brackets virtuellement sur les dents en position corrigée, ainsi que la forme de l'arc orthodontique qui sera nécessaire pour réaliser la correction souhaitée. Pour finir, le « set-up » en 3 dimensions est transformé pour passer de la position corrigée des dents vers la position actuelle des dents afin de déterminer la position des brackets sur les dents en malposition.

L'homme du métier connaît également de la littérature brevet des appareils d'orthodonties à arcs multiples.

Par exemple, selon une autre technique pour corriger la position des dents, relativement ancienne, et qui ne semble pas s'être imposée aux professionnels dans le domaine de l'orthodontie, le document US 3 775 850 divulgue un appareil d'orthodontie à deux arcs parallèles. Chaque bracket de l'appareil comprend quatre points de contact de manière à pouvoir corriger la position de la dent dans l'espace (3 dimensions) en coopérant avec deux arcs, grâce à l'élasticité des arcs. Les points de contact sont constitués par deux paires de gorges du support destinées à être traversées respectivement par les deux arcs. Les quatre gorges sont matérialisées au niveau de deux arêtes saillantes du support, parallèles entre elles. Chaque gorge présente une section ouverte pour l'insertion de l'arc terminée par une partie semi-circulaire correspondante pour faciliter le glissement de l'arc dans la gorge.

Les deux arcs sont de sections rondes, destinés à glisser dans les gorges. Le maintien de chaque arc dans le fond des deux gorges du support est assuré grâce une fermeture telle qu'une ligature, ou encore grâce à une pièce de verrouillage, de forme en U, dont les deux branches sont insérées dans des alésages tubulaires le long des deux arêtes saillantes du support. Selon une autre alternative, le maintien de l'arc dans la gorge est obtenu au moyen d'un rétrécissement de section, de forme en V, permettant de clipper l'arc dans la gorge.

Toutefois, une telle solution présente certains inconvénients. Ainsi, selon les constatations de l'inventeur, les trois solutions de maintien de l'arc dans les gorges engendrent des frottements importants qui perturberont le traitement, et interdiront ainsi d'imposer de faibles efforts de correction.

En outre, dans ce document, les points de contact pour les brackets sont matérialisés par deux arêtes vives susceptibles de constituer une gêne pour le patient, voire d'irriter ou meurtrir les muqueuses buccales.

De plus, dans le cas de forte malposition, ce type d'appareil ne permet pas de corriger la position des dents en utilisant directement les arcs en début de traitement. Dans le cas de forte malposition, tel qu'illustrés à la figure 26, ou 27 de ce document il n'est pas possible, concrètement, d'insérer les arcs dans les deux paires de gorges de chaque support, sans requérir de la part du praticien, notamment de l'orthodontiste, une dextérité bien trop importante, ou encore sans déformer de manière permanente l'arc. Des élastiques sont alors utilisés pour relier l'arc et le support de la dent fortement mal positionnée (figure 26), ou encore des ressorts (figure 27), sont disposés aux endroits requis sur les arcs pour repositionner la ou les dents dans une position permettant le traitement, au moins lors d'une première phase du traitement. Les arcs sont alors seulement utilisés dans un second temps, lorsqu'il devient possible de les insérer dans les gorges des supports, sans déformer les arcs de manière permanente.

Aussi un tel dispositif d'orthodontie ne permet pas de mettre en oeuvre les techniques plus récentes de programmation de traitement, dans le cas de dents fortement mal positionnées.

On connaît toutefois de l'état de la technique, du document US 2011/033812 un appareil d'orthodontie comprenant
- une pluralité de supports (« bracket »), destinés à être assujettis sur la face vestibulaire des dents, présentant chacun deux tunnels, de sections fermées,
- deux arcs destinés à traverser respectivement les tunnels et travaillant de concert avec les supports pour assurer la correction des positions des dents.

Dans un tel appareil, la mise en place des arcs se fait en enfilant l'arc successivement dans les tunnels des différents supports. Pour chaque support, l'extrémité de l'arc est enfilé au travers de l'orifice d'extrémité du tunnel, puis l'arc est poussé jusqu'à ce qu'il ressorte par l'autre extrémité du tunnel.

Selon les constatations des inventeurs, cette mise en place dans un passage de section fermée peut être particulièrement fastidieuse pour le praticien, en particulier en début de traitement, lorsque les dents du patient peuvent présenter de fortes malpositions. Dans ce cas, une insertion aisée n'est possible que si le praticien arrive à insérer l'arc, sensiblement dans l'axe du passage. Autrement, l'extrémité de l'arc se bloque dans le passage et le praticien doit tâtonner afin d'arriver à faire ressortir l'arc. Dans certains cas, et en particulier pour des arcs à mémoire de forme de petit diamètre, l'arc, très flexible, a tendance à se tordre et il peut être particulièrement difficile de le faire ressortir par l'autre extrémité.

On connaît encore du document US2012/301838 un support (ou « bracket ») présentant une cavité pour le maintien de l'arc. Dans un tel support la mise en place de l'arc dans la cavité est obtenue par clipsage au travers d'une ouverture longitudinale de la cavité. La cavité peut présenter selon son axe longitudinal une section de forme quasi cylindrique, de diamètre supérieure aux sections d'extrémité de la cavité. Dans un tel support clipsable, il n'y a pas de problème de mise en place de l'arc, tel que rencontré dans le document US 2011/033812, en ce que la mise en place de l'arc est assurer en clipsant l'arc au travers d'une ouverture longitudinale, et non en insérant l'extrémité de l'arc au travers de l'orifice d'extrémité du passage et jusqu'à l'autre extrémité, comme dans le document US 2011/033812.

On connait encore du document EP 0317098, un support (« bracket ») présentant une gorge qui, de section rectangulaire, engendre des frottements importants avec l'arc, selon les constatations de l'inventeur. Selon ce document, et afin de limiter les frottements avec l'arc, la partie centrale de la gorge est évidée fortement afin d'éviter tout contact entre l'arc et le support au niveau de cet évidement (colonne 6 lignes 50 à 55). Dans un tel support à gorge, il n'y a pas de problème de mise en place de l'arc tel que rencontré dans le document US 2011/033812 en ce que la mise en place de l'arc est assurée en insérant l'arc au travers de l'ouverture de gorge, puis par la pose d'une ligature, et non en insérant l'extrémité de l'arc au travers de l'orifice d'extrémité du passage et jusqu'à l'autre extrémité, comme dans le document US 2011/033812.

On notera encore que réaliser un tel évidement, tel qu'enseigné dans le document EP 0317098 est facilement réalisable industriellement, par exemple par moulage grâce à l'ouverture de gorge.

L'invention a notamment pour objectif de pallier les différents inconvénients de ces techniques connues.

Plus précisément, un objectif de l'invention est, au moins dans un mode de réalisation particulier, de fournir un appareil d'orthodontie facilitant l'insertion des arcs orthodontiques.

L'invention a également pour objectif, au moins dans un mode de réalisation particulier, de fournir un appareil d'orthodontie qui limite les risques de blessures au contact des brackets.

Encore un autre objectif de l'invention est, au moins dans un mode de réalisation particulier, de fournir un appareil d'orthodontie qui soit simple à mettre en place.

Un autre objectif de l'invention est de protéger un procédé de réalisation d'un tel appareil, individualisé.

Ces objectifs, ainsi que d'autres qui apparaîtront plus clairement par la suite, sont atteints selon l'invention à l'aide d'un appareil d'orthodontie vestibulaire, comprenant :
- une pluralité de supports, destinés à être assujettis sur la face avant (vestibulaire) des dents, comprenant chacun deux passages internes de sections rondes, fermées,
- deux arcs ronds, non pliés, destinés à traverser les deux passages, autorisant chacun un glissement entre l'arc et le passage,
et dans lequel les deux arcs et les supports sont destinés à coopérer pour assurer une correction des dents suivant les trois dimensions de l'espace.

Selon un aspect avantageux de l'invention, chacun des deux passages, présente, suivant l'axe du passage, une section en olive.

Avantageusement, les supports peuvent être des supports individualisés présentant chacun une base conformée destinée à épouser intimement le relief de la face avant d'une dent.

Préférentiellement, les supports présentent chacun une face dorsale arrondie, sans arête susceptible d'irriter les muqueuses.

Selon un aspect particulier de l'invention, les supports sont constitués chacun d'un corps monobloc.

Selon un mode de réalisation l'appareil comprend, outre les supports avec les deux passages de sections fermées, dit premiers supports, des seconds supports, chaque second support présentant deux gorges pour les deux arcs, ainsi que des moyens de blocage des deux arcs dans lesdites gorges.

De manière préférentielle, les deux arcs sont dans un matériau à mémoire de forme.

Selon un aspect avantageux de l'invention, l'appareil présente au moins un élastique, les supports comprenant, en tout ou partie, outre les deux passages pour les arcs, un troisième passage, de section fermée, orienté axialement dans la direction axiale des deux passages, intercalé entre les deux passages et destiné à être traversé par l'élastique.

Selon un aspect particulier de l'invention, on forme les supports par frittage laser, usinage ou électroérosion.

L'invention concerne également un procédé de réalisation d'un appareil d'orthodontie individualisé conforme à l'invention, comprenant les étapes suivantes :
- prendre une empreinte, physique ou numérique, des faces des dents en malposition initiale,
- former une représentation en position corrigée des faces des dents sur lesquelles les supports doivent être fixés (le « set-up »),
- déterminer, à partir de ladite représentation en position corrigée des faces des dents, les supports individualisés de l'appareil et la courbure des deux arcs ronds individualisés.

L'invention concerne aussi un ensemble comprenant une gouttière dentaire et des supports dudit appareil obtenu selon le procédé, lesdits supports étant solidaires de la gouttière dentaire, ladite gouttière dentaire étant destinée pour le positionnement correct des supports sur les dents en malposition. Cet ensemble est une gouttière de positionnement.

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- la figure 1 est une vue de profil en perspective de l'appareil d'orthodontie vestibulaire selon l'invention, posé sur une empreinte physique des dents en position corrigée ;
- la figure 2 est une vue, partielle, en perspective trois quart avant de l'appareil d'orthodontie vestibulaire tel qu'illustré à la figure 1 ;
- la figure 3 est une vue proche en perspective d'un support de l'appareil d'orthodontie vestibulaire selon l'invention ;
- la figure 4 est une vue schématique en coupe d'un support de l'appareil d'orthodontie conforme à l'invention, illustrant le passage de section en olive ;
- la figure 5 est une vue schématique en coupe de l'appareil d'orthodontie vestibulaire selon l'invention pour corriger une faible malposition ;
- la figure 6 est une vue schématique en coupe de l'appareil d'orthodontie vestibulaire selon l'invention pour corriger une forte malposition ;
- la figure 7a est une vue schématique en coupe de l'appareil d'orthodontie vestibulaire selon un autre mode de réalisation de l'invention pour corriger un écartement des dents ;
- la figure 7b est une vue de profil d'un support de l'appareil d'orthodontie vestibulaire selon un autre mode de réalisation de l'invention ;
- Les figures 8a à 8c illustrent la facilité d'insertion de l'arc lorsque le passage est de section en olive, suivant l'axe du passage ;
- Les figures 9a et 9b sont des vues, de face et en coupe, de deux supports rapprochés l'un de l'autre par un élastique ;
- Les figures 10a et 10b sont des vues selon une coupe et une vue de côté d'un support utilisé aux figures 9a et 9b et présentant un troisième passage de section fermée, intercalé entre les deux passages pour les arcs, et destiné à être traversé par un élastique.

Comme précédemment évoqué, le principe général de l'invention repose donc sur la mise en oeuvre d'un appareil d'orthodontie vestibulaire destiné à la correction de la position des dents et qui comprend :
- une pluralité de supports 3, (ou brackets), destinés à être assujettis sur la face avant (ou vestibulaire) des dents 2, comprenant chacun deux passages 5 internes de sections rondes et fermées ;
- deux arcs ronds 4, non pliés, de préférence à mémoire de forme, destinés à traverser les deux passages 5, autorisant un glissement entre l'arc 4 et le support.

Les passages peuvent être d'axes sensiblement parallèles, ou bien d'axes divergents légèrement.

Selon l'invention, les deux arcs ronds et les supports sont destinés à coopérer mutuellement pour assurer une correction de la position des dents suivant les trois dimensions de l'espace.

Cette coopération mécanique permet d'imposer des efforts mesurés sur les dents, pour corriger la position des dents de la position non corrigée vers la position corrigée des dents, sans risque d'abîmer les racines des dents, sans douleur pour le patient, efforts qui seront imposés par l'élasticité des deux arcs ronds.

La coopération entre les arcs et les supports permettent de corriger les dents quelque soit leur inclinaison.

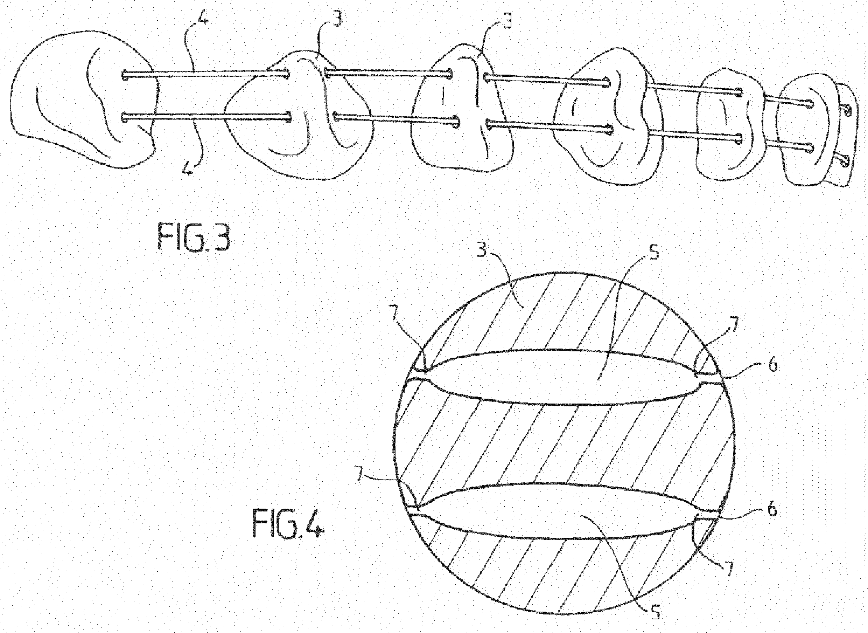

Comme illustrés à la figure 3, selon un exemple non limitatif, les supports 3 comprennent chacun un corps, de préférence monobloc, et présentent chacun une face dorsale arrondie, notamment sans arête susceptible d'irriter et/ou blesser les muqueuses ainsi qu'une base destinée à coopérer avec la face avant d'une dent au moyen d'un collage par exemple. Une telle forme de la face dorsale permet notamment de faciliter leur nettoyage lors du brossage de dents.

Avantageusement, les supports 3 sont de préférence des supports individualisés présentant chacun une base conformée destinée à épouser le relief de la face avant d'une dent, facilitant ainsi la pose et l'opération de collage pour l'orthodontiste.

Le support 3, illustré isolément à la figure 4, est généralement formé en métal, en céramique, ou en un matériau composite, par exemple au moyen d'une opération de frittage laser par exemple, usinage, stéréolithographie, électroérosion, ou tout autre moyen connu de l'homme du métier.

Selon l'invention, le support 3 comprend deux passages 5 internes, traversant, qui présentent chacun une section ronde dans un plan perpendiculaire à l'axe du passage de manière à favoriser le glissement des arcs. La section de chaque passage 5 est fermée, ce qui assure le maintien de l'arc dans le passage, sans nécessiter de systèmes de fermeture tels que ligatures, clips ou autres tels que rencontrés dans les supports de l'état de la technique. Dans le cas de supports monoblocs, les deux passages 5 sont réalisés dans la masse du corps du support.

Cette disposition permet avantageusement de réduire au maximum les frottements entre les arcs et les supports correspondants, permettant d'imposer de très faibles efforts de correction, sans risque de perturbation du traitement par un tel système de fermeture.

Par exemple, les passages internes 5 peuvent être cylindriques. De manière préférentielle, toutefois, les passages internes 5 présentent une section en olive suivant l'axe du passage. Une telle section en olive se caractérise par un diamètre du passage qui est maximum au niveau de la zone médiane du passage 5, (selon l'axe du passage), et un diamètre minimum aux deux extrémités 7 du passage 5.

Une telle section en olive permet notamment de faciliter le passage de l'arc orthodontique 4 lors de l'insertion de l'arc dans les passages 5 via les orifices 6 aux deux extrémités de chaque passage 5. En effet, l'arc 4 peut être inséré aisément dans le passage quelque soit son angle d'introduction, celui-ci venant alors glisser le long de la paroi incurvée du passage 5, même lorsque l'arc est incliné fortement par rapport à l'axe du passage 5.

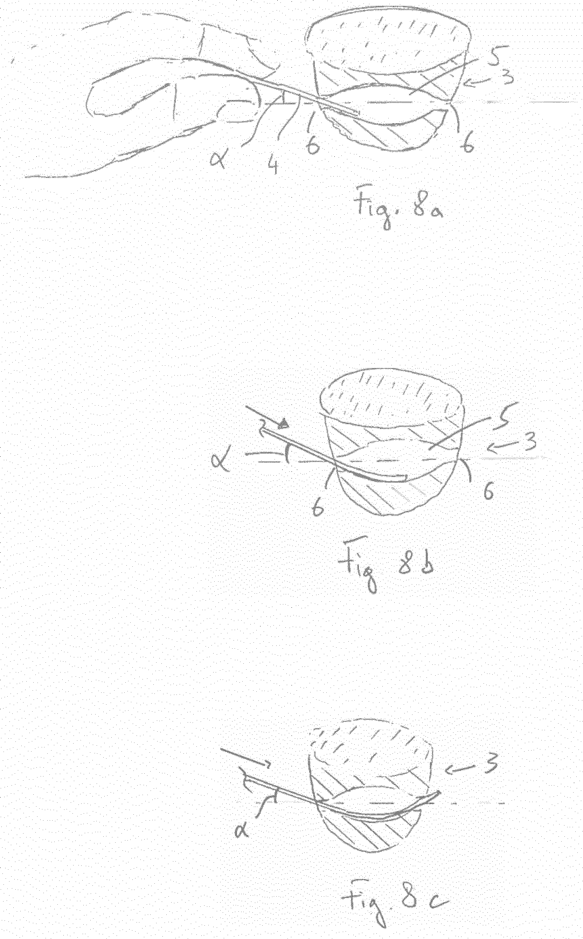

Cet avantage est illustré en détail aux figures 8a à 8c : aussi à la figure 8a, la forme en olive du passage 5 permet l'insertion de l'arc 4 dans le passage 5 au travers de l'un des orifices 6, alors que l'arc est incliné d'un angle α par rapport à l'axe du passage 5. A la figure 8b l'insertion se poursuit alors que l'arc 4 est toujours incliné dudit angle α, par une poussée de l'arc au travers du passage 5 et jusqu'à ce que l'extrémité de l'arc 5 ressorte au travers de l'autre orifice 6, tel qu'illustré à la figure 8c.

Lors de cette insertion, et alors que l'arc est toujours incliné dudit angle α, juste en amont de l'orifice d'insertion, la paroi incurvée du passage de section en olive assure avantageusement le guidage de l'extrémité de l'arc 4, depuis l'orifice d'entrée et jusqu'à l'orifice de sortie, sans risque de blocage de l'extrémité de l'arc. La courbure de ce passage est progressive, dépourvue de palier et/ou de courbure trop forte susceptibles de créer de tels blocages.

Les inventeurs ont constaté qu'une telle possibilité d'insérer l'arc était particulièrement avantageuse, en début de traitement, lorsque les dents du patient peuvent présenter de fortes malpositions. Dans ce cas, les passages de section en olive facilitent grandement la mise en place des arcs. La possibilité d'insérer l'arc selon un angle α qui peut être supérieure ou égale à 15°, voire supérieur à 20°, voire encore supérieure à 30°.

Cette possibilité est donc valable et d'intérêt au moins pour les arcs de diamètres utilisés en début de traitement, typiquement de diamètre inférieur ou égale à 0.014 pouces (i.e . 0.012, 0.010..), qui très flexibles ,ont tendance, au moindre contact, à se bloquer et à se tordre facilement dans le passage.

Il est du mérite des inventeurs d'avoir conçu un tel passage qui facilite la mise en place des arcs.

Encore un autre avantage d'une telle section en olive est de faciliter le travail de l'arc 4 en offrant à l'arc une plus grande amplitude de travail à l'intérieur du passage 5, l'arc pouvant se déformer selon la forme de la paroi du passage incurvé et éventuellement prendre un point d'appui supplémentaire sur la paroi intérieure du passage 5.

Les arcs 4 peuvent éventuellement être recouverts d'un revêtement, notamment de moindre coefficient de frottement tel que du téflon ou tout autre matériau connu de l'homme du métier, de telle façon à former une gaine tout autour des arcs 4 et ainsi faciliter le glissement des arcs 4 dans le support, au niveau des passages internes 5 et/ou de ses extrémités 7. Ce mode de réalisation présente également pour avantage de procurer un meilleur aspect esthétique, de par la possibilité d'appliquer une couleur à la gaine enrobant les arcs 4, et en particulier une couleur proche de la teinte des dents du patient.

Ces deux passages 5 internes permettent ainsi d'obtenir au moins quatre points de contact pour pouvoir corriger la position de la dent dans les trois dimensions, les quatre points de contact étant formés par les deux extrémités 7 de chacun des deux passages 5, notamment de section en olive, et sont éventuellement complétés par un point de contact interne lorsque l'arc 4 prend appui sur la surface interne du passage 5. Ainsi, la position de la dent mal positionnée est correctement corrigée.

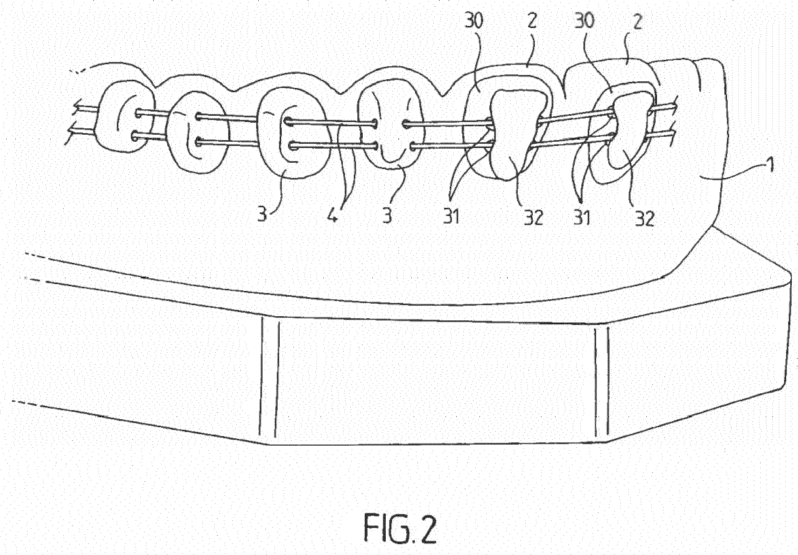

L'appareil orthodontique comprend, de préférence, outre les supports avec les deux passages 5 de sections fermées, dit premiers supports, des seconds supports 30, visibles à la figure 2, chacun des seconds supports 30 présentant deux gorges 31 cylindriques aptes à recevoir respectivement les deux arcs 4, ainsi que des moyens de blocage 32 des deux arcs 4 dans lesdites gorges 31. Les seconds supports 30 facilitent l'insertion des arcs 4 dans les premiers supports 3. Ces seconds supports 30 présentent chacun une base conformée destinée à épouser le relief de la face des incisives centrales supérieures et inférieures (11, 21, 31, 41 selon la nomenclature de la Fédération Dentaire Internationale) et sont fixés à ces dernières au moyen d'un collage également.

Les moyens de blocage peuvent par exemple être un simple ligaturage ou bien un système de clips amovibles de façon à maintenir l'arc en place dans les gorges 31.

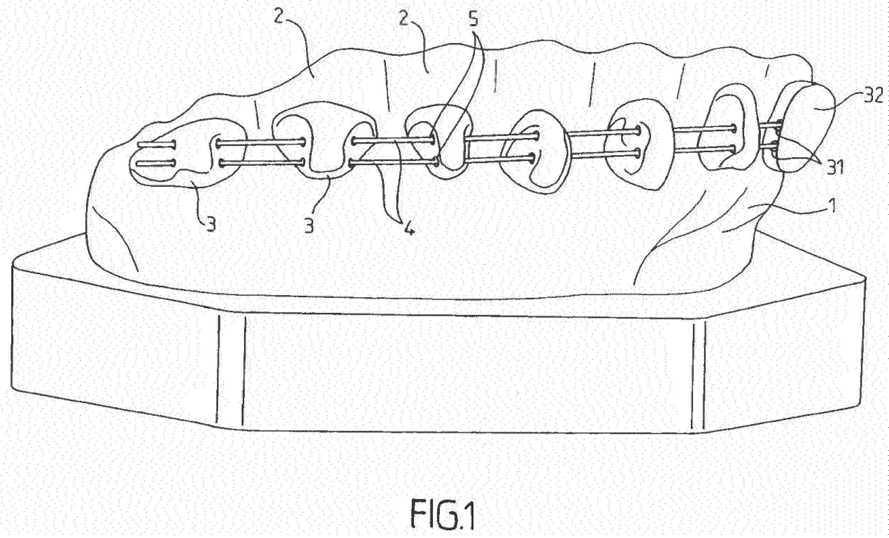

L'appareil orthodontique comprend aussi les deux arcs 4, un arc supérieur et un arc inférieur, visibles sur les figures 1 et 2, formés de préférence dans un matériau, tel qu'un alliage ou un composite, à mémoire de forme, par exemple de type Nickel-Titanium. Ces arcs 4 sont de sections rondes de manière à faciliter leur mise en place et réduire les frottements avec les supports, et plus particulièrement les passages internes 5 et/ou les gorges 31. Les arcs 4 sont destinés à coopérer avec les passages internes 5 et les gorges 31 des premiers et seconds supports 3,30 de telle manière à appliquer une force sur les dents à repositionner via les supports 3,30. De tels arcs entrainent par application de forces légères et régulières moins de problèmes au niveau de la racine lors du traitement et permettent donc un traitement plus souple et moins douloureux pour le patient.

Lors du traitement, le diamètre des arcs 4 est amené à augmenter (i.e de 0.012 à 0.018 pouces), un arc de diamètre plus élevé que le précédent appliquant des forces plus fortes. Avantageusement, notamment dans le cas de dents fortement mal positionnées, il est également possible d'utiliser des arcs de diamètres inférieurs à 0.012 pouces (« inch » en anglais). Par exemple il est possible d'utiliser des arcs de diamètre compris entre 0.010 pouces et 0.004 pouces tel que par exemple 0.006 pouces.

La figure 3 illustre de manière détaillée l'assemblage supports/arcs orthodontiques. Les arcs 4 sont passés au travers des passages internes 5 de chaque support 3 préalablement posé sur chaque dent, en commençant de préférence par insérer les arcs dans les supports 3 présents à proximité des incisives centrales d'un côté jusqu'à atteindre le dernier support sur la dernière molaire, puis de l'autre en réalisant la même opération. Une fois les arcs 4 en place ceux-ci sont finalement placés dans les gorges 31 présentes sur les supports 30 disposés sur les incisives, puis maintenus en place par le biais de moyens de blocage tels qu'un clip, un ligaturage ou une vis de blocage pour sécuriser la position de l'arc.

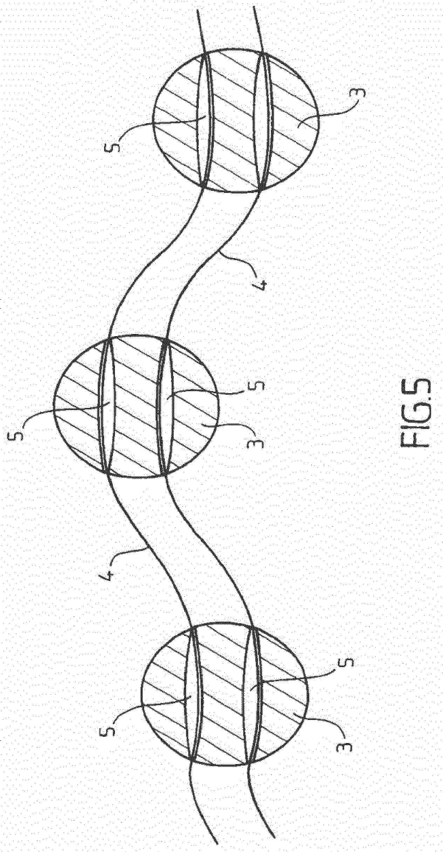

Un appareil d'orthodontie selon l'invention permet de corriger la plupart des malpositions des dents. Ainsi, tel qu'illustré à la figure 5, l'appareil permet de corriger de faibles malpositions des dents, les arcs 4 pouvant passer à travers les passages internes 5 aisément et ainsi remettre la dent mal positionnée dans l'alignement des dents voisines via le travail des arcs 4 à mémoire de forme.

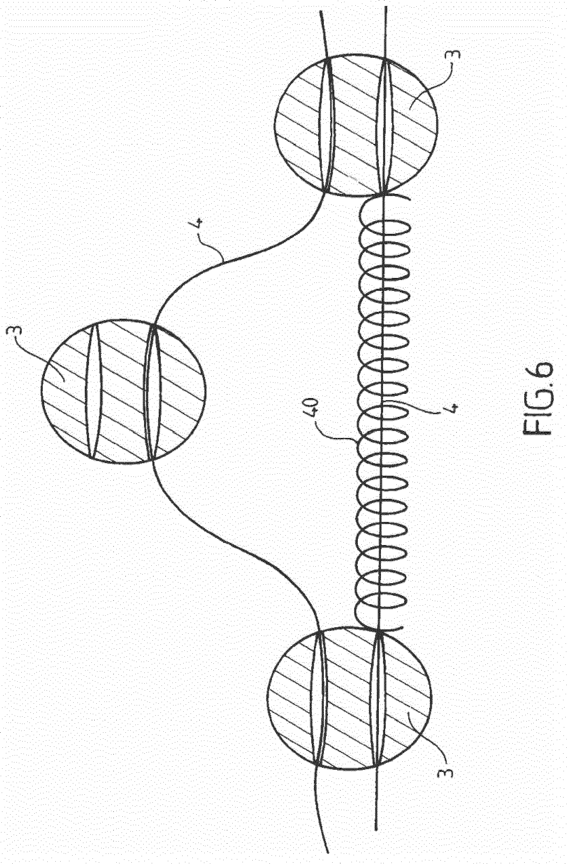

Dans le cas de forte malposition, l'appareil orthodontique permet également de les corriger. Tel qu'illustré à la figure 6, une dent comporte une forte malposition qui nécessite dans un repositionnement préalable au début du traitement. Ce repositionnement est réalisé au moyen de l'arc 4 supérieur qui passe au travers du passage interne 5 inférieur du support 3 disposé sur la dent mal positionnée. Des moyens ressort 40 peuvent être disposés sur l'arc inférieur entre les deux supports 3 de telle manière à écarter les dents liées aux supports et ainsi laisser passer la dent intermédiaire mal positionnée, tel qu'illustré à la figure 6.

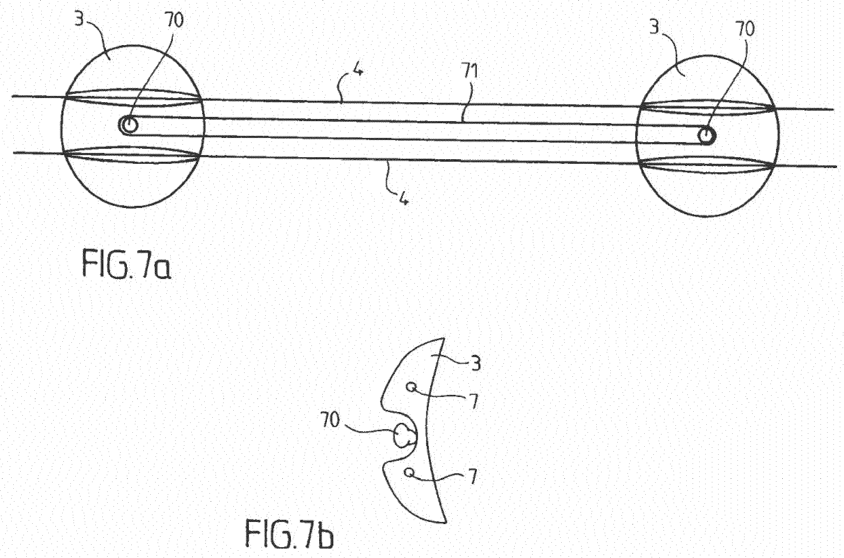

Dans certains cas, il peut être au contraire nécessaire de rapprocher les dents liées aux supports 3. Dans ce cas illustré à la figure 7a, des tétons 70 peuvent être ajoutés au support afin de servir de point d'accroche pour des élastiques 71. Ces tétons, visibles à la figure 7b, sont disposés en retrait dans une cavité du support 3, de telle manière à ce que le téton ne soit pas saillant et ne blesse pas les muqueuses du patient.

Alternativement, et de préférence, afin de rapprocher les dents liées aux supports 3, on peut utiliser des supports 3 présentant, chacun, outre les deux passages 5 pour les arcs 4, un troisième passage 80, destiné à être traversé par un élastique 8.

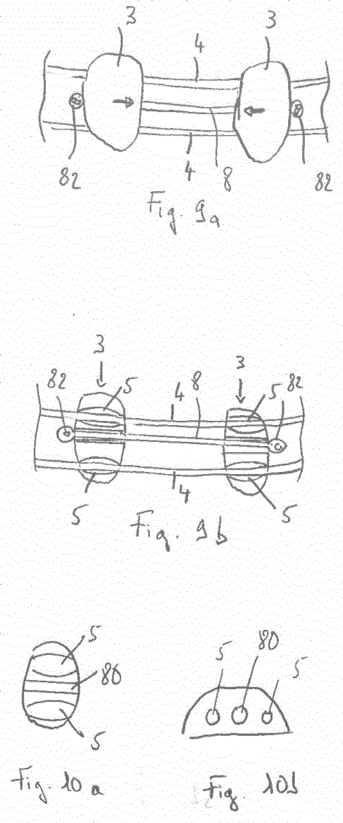

Comme illustré à titre d'exemple non limitatif des figures 9a à 10b, le troisième passage 80 pour l'élastique 8 est avantageusement intercalé entre les deux passages 5 pour les arcs 4 et orienté axialement dans une direction proche ou parallèle à la direction axiale des passages 5, disposé de préférence dans le plan des deux passages 5.

Il est possible de rapprocher les dents liés aux supports 3 par la force de rappel de l'élastique 8 qui agit sur les supports, entre les arcs, de manière à perturber le moins possible l'action correctrice des arcs.

Contrairement à la solution avec téton 70 illustrée aux figures 7a et 7b, cette solution des supports comprenant ce troisième passage 80 permet de conserver une face dorsale arrondie, sans arête susceptible d'irriter les muqueuses. Pour rapprocher les dents liés aux supports 3 et tel qu'illustré aux figures 9a et 9b, les deux extrémités de l'élastique traversent respectivement les troisièmes passages 80 des deux supports, l'élastique étant alors en tension. Afin d'assurer le maintien de l'élastique, on peut nouer les extrémités de l'élastique 8. Ces noeuds 82, de dimension supérieure aux orifices du troisième passage 80, sont des butées qui appuient, tels qu'illustrés aux figures 9a et 9b, sur les faces latérales des supports 3 et de manière à les rapprocher.

Le nombre de corrections possibles est relativement important et l'homme du métier, à savoir l'orthodontiste, saura utiliser l'appareil d'orthodontie selon l'invention afin de corriger les malpositions des dents auxquelles il est confronté.

L'invention concerne également un procédé de réalisation d'un appareil d'orthodontie individualisé selon l'invention, comprenant les étapes suivantes.

Dans un premier temps, on prend une empreinte, physique ou numérique, des faces des dents en malposition, par exemple, par le biais d'un moule en matière plastique ou tout autre matériau connu pour cette pratique, ou bien encore au moyen d'une radiographie tridimensionnelle ou au moyen d'une caméra intrabuccale 3D.

Ensuite on forme une représentation en position corrigée des faces des dents sur lesquelles les supports doivent être fixés, par le biais de moyens informatiques, ou encore en travaillant sur le moulage, par une découpe et repositionnement des dents : c'est le set-up. Finalement, on détermine, à partir de la représentation en position corrigée des faces des dents, les courbures des deux arcs de positionnement, de section ronde. Ces deux arcs de positionnement sont des arcs virtuels, destinés au bon positionnement des supports individualisés, leur diamètre étant équivalent au diamètre des passages 5, de telle façon à obtenir une très grande précision dans le placement des supports individualisés.

Les deux arcs de positionnement, de sections rondes, conformés selon la forme de l'arcade dentaire sont alors positionnés, numériquement, sur la face vestibulaire des dents du set-up obtenu.

Des supports individualisés (les « brackets ») selon la face vestibulaire des dents sont ensuite réalisés numériquement, à partir de la position des arcs de positionnement. Ainsi, chaque support, de préférence monobloc, comprend deux passages de section ronde destinés à recevoir les arcs ronds individualisés.

Le trajet des passages est déterminé par la position et le diamètre des arcs de positionnement. Le diamètre des passages (au moins au niveau de ses extrémités) est déterminé par le diamètre des arcs ronds utilisés en fin de traitement, c'est-à-dire les arcs dont le diamètre est le plus grand. Le diamètre des passages correspond au diamètre des arcs ronds individualisés qui seront utilisés en fin de traitement, au jeu de fonctionnement près, c'est-à-dire un glissement sans jeu.

Les courbures des deux arcs ronds individualisés correspondent à la courbure des deux arcs de positionnement.

La position est déterminée selon le set-up de telle façon à ce que les arcs coulissent dans ces passages adaptés.

Les supports auront de ce fait enregistré toutes les informations de fin de traitement programmées conformément au set-up réalisé.

Les supports réalisés sont finalement collés idéalement en bouche grâce à l'utilisation d'une gouttière de positionnement, décrite ci-dessous, puis les arcs ronds individualisés sont mis en place dans les supports en les passant au travers des passages.

Une telle technique permet de corriger la position des dents en respectant, si souhaité, la physiologie naturelle de la dentition, et plus particulièrement la courbe de Spee et la courbe de Wilson.

L'invention concerne également la gouttière de positionnement à savoir un ensemble comprenant une gouttière dentaire et les supports de l'appareil obtenu selon le procédé détaillé précédemment. La gouttière est formée dans un matériau souple et déformable comme du silicone par exemple et surmoulée sur les supports 3, 30 (premiers supports et/ou deuxièmes supports 30). La gouttière dentaire est destinée pour le positionnement correct des supports sur les dents en malposition, chaque support 3, 30 étant solidaire de la gouttière dentaire et déplaçable individuellement. Selon un mode de réalisation particulier, la gouttière peut être en plusieurs éléments distincts, chaque élément pouvant recevoir au moins un support 3, 30.

Lors de la pose des supports 3, 30, l'orthodontiste dépose préalablement de la colle sur la base de chaque support présent dans la gouttière, puis vient positionner la gouttière au niveau des dents préalablement préparées au collage, le fond de la gouttière prenant appui sur la couronne des dents. L'orthodontiste pose ensuite les supports 3, 30 sur la face avant des dents en appuyant sur la périphérie de la gouttière de telle manière à solidariser la base des supports 3, 30 à la face des dents. Après un court moment, le temps que la colle maintienne chaque support sur chaque dent, l'orthodontiste peut retirer la gouttière en démoulant minutieusement cette dernière de façon à laisser en place les supports 3, 30. Une fois les supports 3, 30 en place, l'orthodontiste n'a plus qu'à mettre en place les arcs orthodontiques 4.

Naturellement, d'autres modes de réalisation auraient pu être envisagés par l'homme du métier sans pour autant sortir du cadre de l'invention définie par les revendications ci-après.

## Revendications

1. Procédé de réalisation d'un appareil d'orthodontie vestibulaire individualisé comprenant :
- une pluralité de supports (3), destinés à être assujettis sur la face vestibulaire des dents (2), comprenant chacun deux passages (5) internes de sections rondes, fermées,
- deux arcs (4) ronds, non pliés, destinés à traverser les deux passages (5), autorisant un glissement entre l'arc (4) et le passage (5),
et dans lequel les deux arcs (4) et les supports (3) sont destinés à coopérer pour assurer une correction des dents (2) suivant les trois dimensions de l'espace,
, et dans lequel ledit procédé comprend les étapes suivantes :
- prendre une empreinte, physique ou numérique, des faces des dents en malposition initiale,
- former une représentation en position corrigée des faces des dents sur lesquelles les supports doivent être fixés,
- déterminer, à partir de ladite représentation en position corrigée des faces des dents, les supports (3, 30) individualisés de l'appareil et la courbure des deux arcs ronds individualisés.

2. Procédé selon la revendication 1 dans lequel les arcs (4) ronds sont de diamètres inférieurs à 0.012 pouces.

3. Procédé selon la revendication 2 dans lequel les arcs (4) ronds sont de diamètre compris entre 0.004 pouces et 0.010 pouces.

4. Procédé selon l'une des revendications 1 à 3, dans lequel on choisit pour chacun des deux passages (5), des passages présentant, suivant l'axe du passage, une section en olive de manière à permettre l'insertion de l'arc (4) dans le passage de section en olive, même lorsque l'arc (4) est incliné par rapport à l'axe du passage (5), en autorisant le glissement de l'arc le long de la paroi incurvée du passage (5).

5. Procédé selon l'une des revendications 1 à 4, dans lequel on choisit pour les supports (3) des supports individualisés présentant chacun une base conformée destinée à épouser intimement le relief de la face vestibulaire d'une dent (2).

6. Procédé selon l'une des revendications 1 à 5, dans lequel on choisit pour les supports (3) des supports présentant chacun une face dorsale arrondie, sans arête susceptible d'irriter les muqueuses.

7. Procédé selon l'une des revendications 1 à 6, dans lequel on choisit pour les supports (3) des supports qui sont constitués chacun par un corps monobloc.

8. Procédé selon l'une des revendications 1 à 7 dans lequel on choisit pour l'équipement, un équipement comprenant, outre les supports (3) avec les deux passages de section fermée, dit premiers supports, des second supports (30), chaque second support (30) présentant deux gorges (31) pour les deux arcs (4), ainsi que des moyens de blocage (32) des deux arcs (4) dans lesdites gorges (31).

9. Procédé selon l'une des revendications 1 à 8, dans lequel on choisit pour les deux arcs (4) des arcs qui sont dans un matériau à mémoire de forme.

10. Procédé selon l'une des revendications 1 à 9, dans lequel on choisit pour l'équipement un équipement présentant au moins un élastique (8), les supports (3) comprenant, en tout ou partie, outre les deux passages (5) pour les arcs (4), un troisième passage (80), de section fermée, orienté axialement dans la direction axiale des deux passages (5), intercalé entre les deux passages (5) et destiné à être traversé par l'élastique (8).
